# EUROPÄISCHE PATENTANMELDUNG

(11) **EP 1 449 959 A2**
(43) Veröffentlichungstag der Anmeldung: **25.08.2004**
(21) Anmeldenummer: 04011205.4
(22) Anmeldetag: 05.08.1999
(51) Int. Cl.: D21G 1/00

(54) **Vorrichtung zum Behandeln einer Materialbahn, insbesondere aus Papier oder Karton**

(30) Priorität: 06.08.1998 DE 19835649; 02.07.1999 DE 19930600
(62) Teilanmeldung aus: 99115514.4
(71) Anmelder: Voith Paper Patent GmbH, 89522 Heidenheim (DE)
(72) Erfinder: Kustermann, Martin, Dr., 89522 Heidenheim (DE); Klug, Alexander, 86720 Nördlingen (DE)
(74) Vertreter: Jordan, Volker, Dr.

(57) **Zusammenfassung**

Vorrichtung (510) zum Behandeln einer laufenden Materialbahn (516) insbesondere aus Papier oder Karton, umfassend
- ein Anpreßelement (512), beispielsweise eine Anpreßwalze, und ein Gegenelement (513), beispielsweise eine Gegenwalze,
   wobei Anpreßelement (512) und Gegenelement (513) zwischen sich einen Spalt (515) bilden, durch welchen sich die Materialbahn (516) hindurchbewegt, und
- eine Vorrichtung zum Bestimmen der Verteilung des in dem Spalt (515) herrschenden Drucks, wobei
wenigstens eines der beiden Elemente, Anpreßelement (512) oder/und Gegenelement (513), als Walze ausgebildet ist, und daß die Druckverteilung-Bestimmungsvorrichtung eine Sensoranordnung (554/556, 558/560) mit einer Mehrzahl von sowohl in Umfangsrichtung (U) als auch in Achsrichtung (A) an der Walze (512) verteilt angeordneten Sensoren (554,558) umfaßt.

## Beschreibung

Die Erfindung betrifft eine Vorrichtung zum aktiven Schwächen unerwünschter Schwingungen einer rotierenden Walze, wobei die Vorrichtung eine Sensoreinrichtung zum Erfassen der unerwünschten Schwingungen umfaßt, sowie eine Kraftgeräteinrichtung, welche in Abhängigkeit des Erfassungsergebnisses auf die Walze im Sinne einer Schwächung der unerwünschten Schwingungen einwirkt. Die erfindungsgemäße Vorrichtung ist beispielsweise zum Einsatz in Maschinen zum Herstellen oder/und Veredeln, insbesondere Beschichten, einer Materialbahn, insbesondere aus Papier oder Karton, gedacht.

Eine derartige Vorrichtung ist beispielsweise aus der DE 196 52 769 A1 bekannt. Der Schwingungssensor der bekannten Vorrichtung ist dabei gemäß einer ersten alternativen Ausführungsform an einer Lagerstelle bzw. den Lagerstellen der Walze angeordnet. Gemäß einer zweiten alternativen Ausführungsform schlägt die DE 196 52 769 A1 vor, den Schwingungssensor in der Maschinenmitte anzuordnen. In einer Versuchsanordnung wurde ein kapazitiver Sensor eingesetzt, der in Maschinenmitte, d.h. im Bereich der Längsmitte der Walze, in unmittelbarer Nähe der im wesentlichen kreiszylindrischen Mantelfläche der Walze angebracht war.

Die Anordung des Schwingungssensors im Bereich der Maschinenmitte hat den Vorteil, daß die Amplitude der Schwingungen dort aufgrund des großen Abstands von den Lagerstellen der Walze und der hieraus resultierenden großen "Ausschläge" der Walze (z.B. durch zusätzliche Biegeschwingungsbeiträge) mit hoher Genauigkeit erfaßt werden kann. Nachteilig ist es jedoch, daß der kapazitive Sensor der Walzenoberfläche unmittelbar benachbart angeordnet werden muß. Zum einen beschwört dies bei Einsatz der Schwingungsschwächungsvorrichtung in einer Maschine zum Herstellen oder/und Beschichten einer Materialbahn, insbesondere aus Papier oder Karton, das Risiko herauf, daß der Sensor bei einem Abriß der Materialbahn und dem anschließenden sogenannten "Einpacken" der Walze beschädigt wird. Zum anderen besteht die Gefahr, daß die Funktionsfähigkeit des Sensors infolge Verschmutzung durch Beschichtungsmedium, Faserstoffe oder dergleichen beeinträchtigt wird. Darüber hinaus erschwert ein in unmittelbarer Nähe der Mantelfläche der Walze angeordneter Sensor für das Wartungs- oder Betriebspersonal den Zugang zu der bzw. Zugriff auf die Mantelfläche. Schließlich hat es sich als schwierig erwiesen, die Schwingungsamplitude an beschichteten, beispielsweise gummierten oder/und mit einem Film von Beschichtungsmedium versehenen, Oberflächen präzise zu erfassen.

Sensoren, die an den Lagerstellen der Walze angeordnet sind, weisen zwar die vorstehend diskutierten Nachteile nicht auf. Jedoch ist es aufgrund der Tatsache, daß die Lagerstellen mit Schwingungsknoten der unerwünschten Schwingungen der Walze zusammenfallen, erheblich schwieriger, die Schwingungsamplitude an den Lagerstellen mit der erforderlichen Präzision zu erfassen als im Bereich der Maschinenmitte.

Aus der WO 97/03832 ist ein Verfahren und eine Vorrichtung zur Verminderung von Biegeschwingungen rotierender Systeme bekannt, welche zum Einsatz bei Presseur-Walzen von Tiefdruckmaschinen konzipiert sind. Die Arbeitsbreite und die Laufgeschwindigkeit der Materialbahnen in derartigen Tiefdruckmaschinen unterscheidet sich erheblich von jenen in einer Maschine zum Herstellen oder/und Beschichten der Materialbahnen.

Demgegenüber ist es Aufgabe der Erfindung, eine Vorrichtung der eingangs genannten Art anzugeben, welche eine präzise Erfassung der Amplitude der Walzenschwingungen ermöglicht und dennoch unanfällig für Verschmutzung und Beschädigung ist sowie dem Betriebs- oder/und Wartungspersonal im wesentlichen ungehinderten Zugang zu bzw. Zugriff auf die Mantelfläche der Walze gewährt.

Diese Aufgabe wird erfindungsgemäß von einer Vorrichtung der eingangs genannten Art gelöst, bei welcher die Sensoreinrichtung wenigstens einen Sensor umfaßt, der bezüglich der Rotationsachse der Walze radial innerhalb der im wesentlichen kreiszylindrischen äußeren Mantelfläche der Walze angeordnet ist, oder/und wenigstens einen Sensor umfaßt, der von der im wesentlichen kreiszylindrischen Mantelfläche der Walze entfernt angeordnet ist.

Gemäß dem ersten vorstehend angegebenen Lösungsprinzip wird die Sensoreinrichtung unter der Walzenoberfläche angeordnet. Dort ist sie weder der Gefahr einer Verschmutzung durch Beschichtungsmaterial noch dem Risiko einer Beschädigung bei einem Bahnabriß ausgesetzt. Ferner ist der freie Zugang zur Walzenoberfläche ohne weiteres sichergestellt. Darüber hinaus kann die Sensoreinrichtung im Bereich der Maschinenmitte, d.h. im Bereich der Längsmitte der Walze, angeordnet sein, was die Erfassung der Amplitude der Walzenschwingung mit hoher Genauigkeit gewährleistet.

Die Sensoreinrichtung kann beispielsweise wenigstens ein druck- oder/und zug-sensitives Element, beispielsweise einen Dehnungsmeßstreifen, umfassen. Derartige Sensorelemente sind im Stand der Technik zur Erfassung von mechanischen Spannungszuständen bekannt und haben sich in der Praxis als robust, zuverlässig und präzise erwiesen.

Das druck- oder/und zug-sensitive Element kann beispielsweise an der Innenfläche des Walzenzylinders angeordnet sein, wo es durch den Walzenmantel, der beispielsweise aus Stahl gefertigt ist, vor äußeren Einflüssen beispielsweise infolge eines Bahnabrisses geschützt ist. Im Falle innengekühlter Walzen ist lediglich sicherzustellen, daß das druck- oder/und zug-sensitive Element gegenüber dem Kühlmedium, beispielsweise Wasser, resistent ist.

Zusätzlich oder alternativ ist es möglich, ein druck- oder/und zug-sensitives Element an der Außenfläche des Walzenzylinders unter einer Deckschicht, beispielsweise einer Schicht aus Gummi, gummiartigem Material, Kunststoff oder dergleichen, anzuordnen. In diesem Fall wird das druck- oder/und zug-sensitive Element durch diese Schicht vor äußeren Einflüssen geschützt, insbesondere vor einer Beschädigung bei Bahnabriß und einer Verschmutzung durch Beschichtungsmedium.

Gemäß dem zweiten erfindungsgemäßen Lösungsprinzip ist die Sensoreinrichtung von der Walzenoberfläche entfernt angeordnet. Der Abstand zwischen Sensoreinrichtung und Walzenoberfläche kann dabei problemlos derart gewählt werden, daß die Sensoreinrichtung weder durch Beschichtungsmaterial-Spritzer verschmutzt noch bei einem Bahnabriß beschädigt werden kann. Darüber hinaus ist aufgrund des großen Abstands zwischen Sensoreinrichtung und Walzenoberfläche der ungehinderte Zugang zur Walzenoberfläche ohne weiteres gewährleistet. Wiederum kann die Anordnung der Sensoreinrichtung im Bereich der Maschinenmitte eine präzise Erfassung der Amplitude der Walzenschwingung sicherstellen.

Bei einer Maschine mit zwei Walzen, die miteinander einen sogenannten "Nip" bilden, durch den sich die Materialbahn hindurchbewegt, kann eine besonders gute Signalerfassung dadurch erreicht werden, daß man die Sensoreinrichtung in der Verbindungsebene der Achsen der beiden Walzen anordnet.

Diese Schwingungs-Fernerfassung kann in einfacher und zuverlässiger Weise bereitgestellt werden, wenn die Sensoreinrichtung wenigstens eine optische Sensoreinheit umfaßt. Für den freien Zugang zur Mantelfläche der Walze ist es von Vorteil, wenn die optische Sensoreinheit von der Walzenoberfläche einen Abstand von wenigstens einem Meter aufweist.

Erfindungsgemäß können auf verschiedenen Meßprinzipien beruhende Sensoreinheiten zum Einsatz kommen:

Beispielsweise kann die optische Sensoreinheit ein Laser-Vibrometer umfassen, wie es im Stand der Technik an sich bekannt ist und beispielsweise unter der Bezeichnung VH 300 von der Firma Ometron, Inc., Dulles, U.S.A. bezogen werden kann. Dieses Laser-Vibrometer erfaßt die Schwingung der Walze als die parallel zum messenden Laserstrahl verlaufende Komponente der Oberflächengeschwindigkeit der sich drehenden Walze.

Zusätzlich oder alternativ ist es auch möglich, daß eine interferometrisch arbeitende SensoreinheitmechanischeSpannungszuständederWalzenoberfläche erfaßt. Derartige interferometrische Sensoreinheiten sind beispielsweise aus dem Bereich der zerstörungsfreien Werkstoffanalyse bekannt.

Die interferometrische Sensoreinheit kann die mechanischen Spannungszustände beispielsweise an der im wesentlichen kreiszylindrischen Mantelfläche der Walze erfassen. Zusätzlich oder alternativ ist es jedoch auch möglich, daß die interferometrische Sensoreinheit die mechanischen Spannungszustände im Bereich eines Deckelabschnitts der Walze erfaßt, in welchem sich die Walzenoberfläche von der im wesentlichen kreiszylindrischen Mantelfläche zu den Walzenzapfen verjüngt. Gerade im Übergangsbereich zwischen der Mantelfläche und dem Deckelabschnitt sowie im Übergangsbereich zwischen dem Deckelabschnitt und dem Walzenzapfen sind die von den unerwünschten Schwingungen hervorgerufenen Änderungen der Oberflächenspannung der Walze besonders deutlich. Die Erfassung der mechanischen Spannungszustände der Walze im Bereich des Deckelabschnitts hat darüber hinaus den Vorteil, daß die interferometrische Sensoreinheit in Achsrichtung der Walze gesehen vor bzw. hinter dieser angeordnet werden kann und so den freien Zugang zur Mantelfläche der Walze nicht behindert. Die Spannungszustände im Deckelbereich können aber auch durch andere geeignete Spannungssensoren, beispielsweise Dehnungsmeßstreifen, erfaßt werden.

Bei einer Vorrichtung der gattungsgemäßen Art, welche ferner eine Steuereinheit umfaßt, die auf Grundlage von Erfassungssignalen der wenigstens einen Sensoreinrichtung Stellsignale für die wenigstens eine Kraftgeräteinheit bestimmt, wird vorgeschlagen, daß die Steuereinheit zur Bestimmung der Stellsignale die Erfassungssignale einer Mehrzahl von Sensoren additiv oder/und subtraktiv oder/und gewichtet oder/und gemittelt oder/und phasenkorrigiert miteinander kombiniert. Hierdurch können Besonderheiten des Schwingungsverhaltens der Walze in Abhängigkeit von den jeweiligen Betriebsparametern sowie Besonderheiten der eingesetzten Sensoreinheiten, insbesondere, was deren Empfindlichkeit in verschiedenen Bereichen von Schwingungsfrequenzen anbelangt, berücksichtigt werden.

Dabei ist es auch möglich, daß die Steuereinheit die Erfassungssignale wenigstens einer an den Lagern der Walze angeordneten Sensoreinrichtung berücksichtigt, beispielsweise eines druck- oder/und zug-sensitiven Elements, eines Beschleunigungssensors (zur Erfassung von Radialbeschleunigungen) oder dergleichen.

Die Erfindung betrifft darüber hinaus auch ein Verfahren zum aktiven Schwächen unerwünschter Schwingungen einer rotierenden Walze, bei welchem man die unerwünschten Schwingungen mittels einer Sensoreinrichtung erfaßt und in Abhängigkeit des Erfassungsergebnisses eine auf die Walze einwirkende Kraftgeräteinrichtung im Sinne einer Schwächung der unerwünschten Schwingungen ansteuert. Hinsichtlich der Diskussion der Ausführungsvarianten und der damit erzielbaren Vorteile des erfindungsgemäßen Verfahrens sei auf die vorstehende Diskussion der erfindungsgemäßen Vorrichtung verwiesen.

Nachzutragen ist noch, daß mit den Worten "im Bereich der Maschinenmitte ein relativ weiter Bereich um die exakte Längsmitte der Walze bezeichnet ist. Der Grund hierfür ist folgender: Die Verformung der Walze infolge der Schwingung folgt unter Berücksichtigung auftretender Zentrifugalkräfte in guter erster Näherung einer zwischen den beiden seitlichen Lagerstellen und zur Maschinenmitte im wesentlichen symmetrisch verlaufenden Parabel. Bekanntermaßen ändert sich der Wert einer Parabel in der Umgebung des Maximums nur wenig.

Im Hinblick auf die Präzision der Erfassung der Schwingungsausschläge der Walze kann der "Bereich der Maschinenmitte" daher als der Bereich zwischen den beiden Stellen in Achsrichtung der Walze definiert werden, an denen der Schwingungsausschlag etwa 75% des Maximalausschlages in der exakten Maschinenmitte beträgt.

Die Erfindung wird im folgenden an Ausführungsbeispielen anhand der beigefügten Zeichnungen näher erläutert werden. Es stellt dar:
- Fig. 1: eine schematische Darstellung einer erfindungsgemäßen Vorrichtung zum aktiven Schwächen unerwünschter Schwingungen einer rotierenden Walze, welche in einer Streichstation zum Einsatz kommt; und
- Fig. 2: eine Schnittdarstellung längs der Linie II-II in Fig. 1.

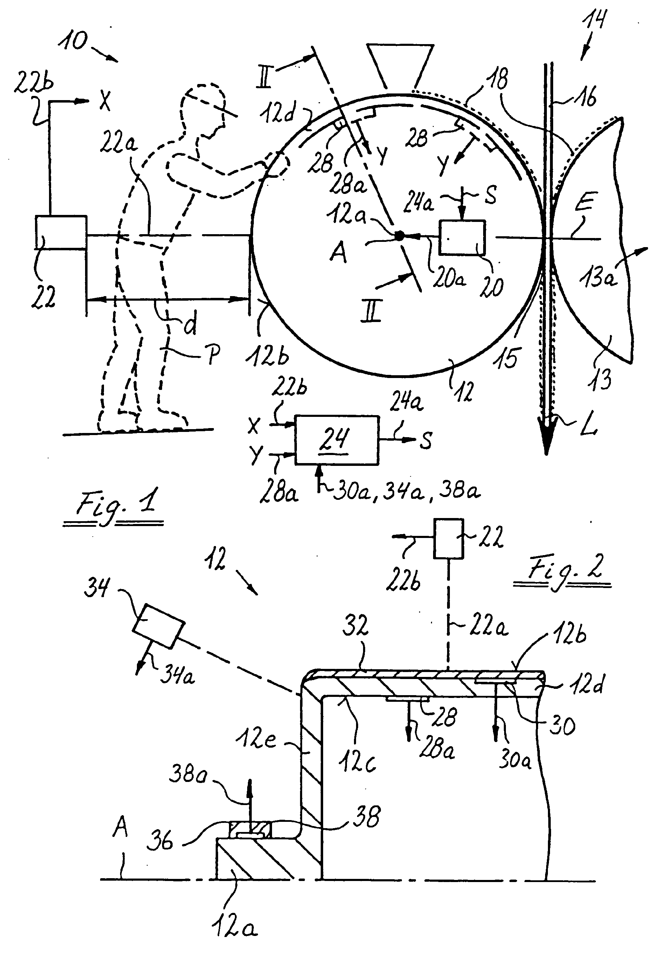

In Fig. 1 ist eine erfindungsgemäße aktive Schwingungsschwächungsvorrichtung allgemein mit 10 bezeichnet. In dem dargestellten, nicht beschränkenden Einsatzbeispiel dient die Vorrichtung 10 zum Schwächen bzw. Kompensieren bzw. Mindern bzw. Dämpfen unerwünschter Schwingungen einer sich um eine Achse A drehenden Walze 12 einer Streichvorrichtung 14 zum indirekten beidseitigen Beschichten einer Materialbahn 16 mit einem flüssigen oder pastösen Auftragsmedium 18. Bereits an dieser Stelle sei jedoch darauf hingewiesen, daß die erfindungsgemäße Vorrichtung mit Vorteil ebensogut auch an anderen rotierenden Walzen eingesetzt werden kann, wie sie in Maschinen zum Herstellen oder/und Beschichten von Materialbahnen, insbesondere aus Papier oder Karton, in vielfältiger Weise vorhanden sind.

In dem Ausführungsbeispiel gemäß Fig. 1 bewegt sich die Materialbahn 16 in Laufrichtung L durch einen "Nip" 15 hindurch, der zwischen zwei benachbart angeordneten Walzen 12 und 13 gebildet ist.

Die aktive Schwächungsvorrichtung 10 umfaßt wenigstens ein Kraftgerät 20, welches mit einem Stellglied 20a auf den Lagerzapfen 12a der Walze 12 einwirkt. Die Einwirkung erfolgt dabei phasenversetzt, vorzugsweise gegenphasig, zu den unerwünschten Schwingungen der Walze 12, wie dies im Stand der Technik bekannt und beispielsweise in der DE 196 52 769 A1 detailliert erläutert ist.

Zur Erfassung der Schwingungen der Walze 12 kann eine Reihe verschiedener Sensoreinheiten eingesetzt werden, die nachstehend im einzelnen erläutert werden, denen jedoch gemeinsam ist, daß sie an einer Stelle angeordnet sind, an der sie weder der Gefahr von Verschmutzung oder/und Schädigung ausgesetzt sind noch den freien Zugang einer Wartungs- oder Bedienungsperson P zur Walzenoberfläche 12 behindern.

So kann beispielsweise in einem Abstand d von der Walzenoberfläche 12b ein Laser-Vibrometer 22 angeordnet sein, dessen Laserstrahl 22a auf die Walzenoberfläche 12b gerichtet ist. Derartige Laser-Vibrometer sind im Stand der Technik bekannt und können beispielsweise unter der Bezeichnung VH 300 von der Firma Ometron Inc., Dulles, U.S.A. bezogen werden. Laser-Vibrometer der genannten Art bestimmen die Schwingungen der Walze 12 aus der parallel zum Laserstrahl 22a gerichteten Komponente der Geschwindigkeit der Walzenoberfläche 12b. Im Hinblick auf eine möglichst hohe Erfassungsgenauigkeit ist das Laser-Vibrometer 22 vorzugsweise in der Ebene E angeordnet, welche die Achsen 12a und 13a der beiden Walzen 12, 13 miteinander verbindet.

Das Erfassungssignal des Laser-Vibrometers 22 wird über eine Signalleitung 22b an eine Steuereinheit 24 übermittelt, welche unter Verwendung dieser Erfassungssignale Stellsignale für das Kraftgerät 20 bestimmt und über eine Signalleitung 24a an dieses ausgibt.

Der Einsatz des Laser-Vibrometers 22 hat den Vorteil, daß dieses in einem sehr großen Abstand d von der Walzenoberfläche 12b angeordnet werden kann, beispielsweise in einem Abstand d von mehr als einem Meter. Derart groß bemessene Abstände stellen zum einen sicher, daß für die Wartungs- oder/und Bedienungsperson P im Bereich der Walze 12 ausreichend Raum zur Verfügung steht, um dieser ungehinderten Zugriff auf die Walzenoberfläche 12b zu gewähren. Darüber hinaus ist durch den großen Abstand zwischen Walzenoberfläche 12b und Laser-Vibrometer 22 sichergestellt, daß das Laser-Vibrometer bei einem Abriß der Materialbahn 16 und dem hieraus häufig resultierenden "Einpacken" der Walze 12 nicht durch die Materialbahn 16 beschädigt wird. Darüber hinaus kann das Laser-Vibrometer 22 vor Verschmutzung durch Spritzer des Auftragsmediums 18 geschützt werden. Schlimmstenfalls ist hierzu zusätzlich ein in Fig. 1 nicht dargestelltes einfaches Blendensystem erforderlich. Aufgrund des großen Abstands von der Walzenoberfläche 12b kann das Laser-Vibrometer 22 ferner ohne weiteres im Bereich der Maschinenmitte, d.h. im Bereich der Längsmitte der Walze 12, angeordnet werden, also in einem Bereich, in welchem die Schwingungen der Walze 12 zu sehr starken Ausschlägen der Walzenoberfläche 12b führen und somit eine sehr präzise Erfassung der Schwingungen der Walze 12 ermöglichen.

Als weiterer Sensortyp zur Erfassung der Schwingungen der Walze 12 sind in Fig. 1 druck- oder/und zug-sensitive Elemente 28 dargestellt, welche an der Innenfläche 12c des Walzenmantels 12d angebracht sind. Die druck- oder/und zug-sensitiven Elemente 28 können beispielsweise von herkömmlichen Dehnungsmeßstreifen gebildet sein. Es ist jedoch ebenso möglich, jede andere Art von druck- oder/und zug-sensitiven Elementen, Filmen und dergleichen einzusetzen. Da ein einzelnes dieser Elemente 28 die Schwingungen der Walze 12 nur an einer bestimmten Stelle dieser Walze erfassen kann, ist es von Vorteil, über den Umfang der Walze 12 eine Mehrzahl derartiger druck- oder/und zugsensitiver Elemente 28 anzuordnen, wie dies in Fig. 1 für einen Teil des Innenumfangs der Walze 12 angedeutet ist. Die Erfassungssignale der Elemente 28 werden wiederum über Signalleitungen 28a oder/und zur Vermeidung von rotationskompatiblen Verbindungen radiometrisch an die Steuereinheit 24 übermittelt, die diese bei der Ermittlung der Stellsignale für das Kraftgerät 20 berücksichtigt.

Da die in Maschinen zum Herstellen oder/und Beschichten von Materialbahnen, insbesondere aus Papier oder Karton, eingesetzten Walzen häufig gekühlt werden müssen, wird empfohlen, entweder nur solche druck- oder/und zug-sensitiven Elemente 28 einzusetzen, die gegenüber dem Kühlmedium, beispielsweise Kühlwasser, resistent sind, oder aber diese Elemente 28 mit einer Schutzschicht bzw. Schutzabdeckung zu versehen. Aufgrund der Anordnung der Elemente 28 an der Innenseite 12c des Walzenmantels 12d sind diese vor einer Beschädigung durch die Materialbahn 16 bei einem "Einpacken" der Walze 12 bzw. vor Verschmutzung durch Spritzer des Beschichtungsmediums 18 geschützt und können ferner den Zugriff der Wartungs- oder/und Bedienungsperson P auf die Walzenoberfläche 12b nicht behindern.

In der Schnittdarstellung gemäß Fig. 2 sind zusätzlich zu dem Laser-Vibrometer 22 und dem druck- oder/und zug-sensitiven Element 28 noch weitere Sensoreinheiten zur Erfassung der Schwingungen der Walze 12 dargestellt:

So ist beispielsweise an der Außenseite des Walzenmantels 12d ein druckoder/und zug-sensitives Element 30 angeordnet, welches durch eine Schicht 32 aus Gummi oder gummiartigem Material, Kunststoff oder dergleichen vor Beschädigung oder/und Verschmutzung geschützt ist. Aufgrund der Tatsache, daß das Element 33 unter der eigentlichen Walzenoberfläche 12b, nämlich der Oberfläche der Schicht 32, angeordnet ist, kann es den Zugriff der Bedienungsperson P auf die Walzenoberfläche 12b nicht behindern. Die Erfassungssignale des Elements 30 können über eine Signalleitung 30a der Steuereinheit 24 zugeführt und bei der Bestimmung der Stellsignale für das Kraftgerät 20 berücksichtigt werden.

Als weitere Sensoreinheit ist in Fig. 2 ein Laser-Interferometer 34 dargestellt, welches die mechanischen Spannungszustände der Walze 12 erfaßt und ein entsprechendes Erfassungssignal über eine Signalleitung 34a an die Steuereinheit 24 übermittelt. Derartige Laser-Interferometer sind beispielsweise aus der zerstörungsfreien Werkstoffanalyse bekannt. Ihr Einsatz macht sich die Tatsache zunutze, daß nicht nur im Bereich der Maschinenmitte, d.h. der Längsmitte der Walze 12, sehr hohe mechanische Spannungen in der Walze 12 auftreten, sondern auch im Bereich der Deckelabschnitte 12e der Walze 12, d.h. zwischen dem Walzenmantel 12d und den Walzenzapfen 12a, und dort insbesondere im Bereich der Übergänge zwischen dem Deckelabschnitt 12e und dem Walzenmantel 12d bzw. im Bereich des Übergangs zwischen dem Deckelabschnitt 12e und dem Walzenzapfen 12a.

Im Ausführungsbeispiel gemäß Fig. 2 ist das Laser-Interferometer 34 auf den Übergang zwischen dem Walzenmantel 12d und dem Walzendeckel 12e gerichtet. Dies hat den Vorteil, daß das Laser-Interferometer 34 neben der Walze 12 angeordnet werden kann und so ungehinderten Zugriff auf die Walzenoberfläche 12b ermöglicht. Darüber hinaus kann auch das Laser-Interferometer 34 in großer Entfernung von der Walze 12 angeordnet werden.

Schließlich ist in der Darstellung gemäß Fig. 2 im Bereich des Lagers 36 des Walzenzapfens 12a noch ein Beschleunigungssensor 38 vorgesehen, der die Schwingungen der Walze 12 aufgrund der Radialbeschleunigung der Walzenzapfen 12a erfaßt. Derartige Beschleunigungssensoren 38 sind im Stand der Technik bekannt. Derzeit werden sie jedoch lediglich gelegentlich aktiviert, um den Verschleißzustand des Lagers 36 zu überprüfen. Bei Einsatz geeignet empfindlicher und dauerbetriebsfähiger Beschleunigungssensoren 38 können diese sowohl zur Verschleißüberwachung als auch zur Erfassung von Schwingungen der Walze 12 eingesetzt werden. Die Erfassungssignale der Beschleunigungssensoren 38 werden der Steuereinheit 24 über Signalleitungen 38a zugeführt.

Da zu erwarten ist, daß sich das Frequenzspektrum der Schwingungen der Walze 12 in Abhängigkeit von den jeweiligen Betriebsbedingungen der Walze 12 bzw. der gesamten Maschine zum Herstellen oder/und Beschichten der Materialbahn 16 ändern wird, das Empfindlichkeits-Frequenzspektrum der Sensoren jedoch fest vorgegeben ist, kann vorgesehen sein, daß die Steuereinheit 24 die Erfassungssignale wenigstens zweier der Sensoren 22, 28, 30, 34 und 38 bei der Bestimmung des Stellsignals für das Kraftgerät 20 in geeigneter Weise miteinander kombiniert, beispielsweise einander additiv oder/und subtraktiv oder/und gemittelt oder/und in Abhängigkeit der Betriebsbedingungen gewichtet oder/und in Abhängigkeit der Anordnung längs des Umfangs der Walze 12 phasenkorrigiert überlagert.

Nachzutragen ist noch, daß etwaig auftretende Eigenbewegungen, insbesondere Eigenschwingungen, von an Maschinenteilen montierten Sensoreinrichtungen, beispielsweise von im Bereich der Maschinenmitte montierten Sensoreinrichtungen, bei der Interpretation der Erfassungssignale dieser Sensoreinrichtungen berücksichtigt werden müssen.

Die Erfindung betrifft ferner eine Vorrichtung zum Behandeln einer laufenden Materialbahn, insbesondere aus Papier oder Karton, umfassend ein Anpreßelement, beispielsweise eine Anpreßwalze, und ein Gegenelement, beispielsweise eine Gegenwalze, wobei Anpreßelement und Gegenelement zwischen sich einen Spalt bilden, durch welchen sich die Materialbahn hindurchbewegt, und eine Vorrichtung zum Bestimmen der Verteilung des in dem Spalt herrschenden Drucks. Die Druckverteilung-Bestimmungsvorrichtung soll es dabei ermöglichen, genaue Aussagen über die im Spalt auf die Materialbahn einwirkenden Kräfte bzw. Drücke zu treffen, um bei allzu großer Variation dieser Kräfte bzw. Drücke über die Arbeitsbreite der Materialbahn gezielt Gegenmaßnahmen ergreifen zu können. Ziel dieser Maßnahmen ist es letztendlich über die gesamte Arbeitsbreite der Materialbahn im wesentlichen konstante Behandlungsbedingungen zu schaffen.

Obgleich die erfindungsgemäße Vorrichtung im Rahmen einer Vielzahl verschiedener Arten von Behandlungen von Materialbahnen eingesetzt werden kann, beispielsweise in der Pressenpartie einer Maschine zur Herstellung der Materialbahn, in Glättvorrichtungen, in Streichvorrichtungen oder auch in Druckmaschinen, soll die Erfindung nachfolgend aus Gründen der anschaulicheren Darstellung anhand einer Vorrichtung zum Auftragen eines flüssigen oder pastösen Auftragsmediums auf die Materialbahn eingehend diskutiert werden.

Herkömmlich wurden zur Bestimmung der Druckverteilung im Auftragsspalt Spezialpapiere in den Auftragsspalt eingeführt, beispielsweise eine zweilagige Schicht aus einem Kohlepapier und einem hellen Abbildungsbogen, oder auch Papiere mit darin eingebetteten, tuschegefüllten Kügelchen, welche unter Druck zerplatzen und die Tusche freigeben. Darüber hinaus wurde von Firma Stowe Woodward eine eine Mehrzahl von Drucksensoren umfassende Folie vorgeschlagen, die anstelle der Spezialpapiere in den Auftragsspalt eingeführt und zur automatischen Messung der dort herrschenden Kräfte- bzw. Druckverteilung genutzt werden kann. Alle diese Druckverteilung-Bestimmungsvorrichtungen haben jedoch den Nachteil, daß sie es lediglich erlauben, die Druckverteilung im stationären Zustand der Auftragsvorrichtung zu bestimmen. Somit können dynamische Einflüsse der Maschinenbewegungen auf die im Auftragsspalt herrschenden Kräfte bzw. Drücke mit den bekannten Druckverteilung-Bestimmungsvorrichtungen nicht berücksichtigt werden. Darüber hinaus ist eine langwierige und umständliche Prozedur erforderlich, um die Variation der Druckverteilung in Umfangsrichtung der Walze zu bestimmen.

Aus der DE 196 42 047 A1 ist es darüber hinaus bekannt, in einem stationären Preßschuh eine Vielzahl von Drucksensoren anzuordnen. Der Nachteil dieser Lösung ist zum einen darin zu sehen, daß die Messung der Druckverteilung nur im Bereich des Preßschuhs erfolgt, und daher eine Zuordnung zu bestimmten Stellen am Umfang des den Preßschuh endlos umlaufenden Abdeckelements aufwendig und schwierig ist. Zum anderen ist nachteilig, daß zwischen den Drucksensoren und der Materialbahn nicht nur das endlose Abdeckelement angeordnet ist, sondern auch ein die Reibung zwischen Abdeckelement und Preßschuh minderndes Schmiermittel sowie eine die Drucksensoren vor dem Schmiermittel schützende Folie.

Demgegenüber ist es Aufgabe der Erfindung, eine Vorrichtung der eingangs genannten Art anzugeben, welche es erlaubt, die Verteilung des in dem Behandlungsspalt herrschenden Drucks auch im laufenden Betrieb der Behandlungsvorrichtung zuverlässig zu bestimmen, so daß bei der Bestimmung etwaiger Korrekturstellgrößen auch dynamische Effekte in einfacher Weise berücksichtigt werden können.

Diese Aufgabe wird erfindungsgemäß durch eine Behandlungsvorrichtung der gattungsgemäßen Art gelöst, bei welcher wenigstens eines der beiden Elemente, Anpreßelement oder Gegenelement, als Walze ausgebildet ist und bei welcher die Druckverteilung-Bestimmungsvorrichtung eine Sensoranordnung mit einer Mehrzahl von sowohl in Umfangsrichtung als auch in Achsrichtung an der Walze verteilt angeordneten Sensoren umfaßt. Durch die erfindungsgemäße Ausbildung der Behandlungsvorrichtung ist zum einen gewährleistet, daß die Sensoren der Sensoranordnung unmittelbar im Bereich der mit der Materialbahn in Kontakt stehenden Oberfläche angeordnet sind, so daß die erfaßten Meßwerte eine hohe Aussagekraft besitzen. Zum anderen sind die Sensoren nicht nur in Achsrichtung der Walze verteilt angeordnet, was überhaupt erst die Bestimmung einer Druckverteilung in Richtung der Arbeitsbreite erlaubt, sondern auch in Umfangsrichtung der Walze, was es ermöglicht in jeder Drehstellung der Walze die Druckverteilung im Spalt zu bestimmen. Somit ist zu jedem Zeitpunkt sowohl bei stillstehender Behandlungsvorrichtung als auch bei mit voller Produktionsgeschwindigkeit laufender Behandlungsvorrichtung die Bestimmung der jeweiligen Verteilung des im Spalt herrschenden Drucks möglich.

Die Sensoren können vorzugsweise zur mittelbaren oder unmittelbaren Druckerfassung ausgebildet oder/und angeordnet sein. Besteht die Gefahr einer Beschädigung der Oberfläche der Materialbahn nicht oder nur in vernachlässigbar geringem Maße, so können die Sensoren zur Druckerfassung unmittelbar an der Oberfläche der Walze angeordnet sein.

Bei einer mit einer elastischen Deckschicht versehenen Walze, wobei diese Deckschicht beispielsweise aus Gummi, gummiartigem Material oder Kunststoff gefertigt sein kann, wird vorgeschlagen, daß wenigstens ein Teil der Drucksensoren der Sensoranordnung an der Außenfläche der Walze unter dieser Deckschicht angeordnet ist. Bei einer Auftragsvorrichtung schützt diese Deckschicht die Drucksensoren vor möglichen schädlichen Einflüssen des Auftragsmediums. Darüber hinaus befindet sich mit dieser Deckschicht lediglich eine einzige, sich auf das Erfassungsergebnis auswirkende Schicht zwischen der Materialbahn und den Sensoren. Somit sind bei hoher Lebensdauer der Sensoranordnung dennoch aussagekräftige Messungen möglich.

Auch die zu den Sensoren führenden Leitungen, beispielsweise Stromzuführleitungen bzw. Signalabführleitungen können in einfacher Weise unter der Deckschicht verlegt sein.

Zusätzlich oder alternativ zu der Anbringung der Sensoren unter der Deckschicht ist es ferner möglich, daß wenigstens ein Teil der Sensoren der Sensoranordnung in den Walzenmantel eingebettet ist. Dieses Einbetten kann insbesondere dann, wenn die Walze aus faserverstärktem Kunststoff gefertigt ist, beispielsweise kohlefaserverstärktem Kunststoff (CFK-Kunststoff), bereits bei der Herstellung der Walze erfolgen. Sowohl bei Walzen aus faserverstärktem Kunststoff als auch bei Walzen aus Stahl ist es überdies möglich, die Sensoren nach Herstellung der Walze in diese einzubetten.

In entsprechender Weise können auch die zu den Sensoren führenden Leitungen bei der Herstellung oder nachträglich in den Walzenmantel eingebettet sein.

In Weiterbildung der Erfindung wird vorgeschlagen, daß wenigstens ein Teil der Sensoren in einer Meßfolie zusammengefaßt ist. Diese Ausführungsform hat insbesondere bei Anordnung der Sensoren unter einer Deckschicht überdies den Vorteil einfacher Verarbeitung.

Die Sensoren können den Wert des erfaßten Drucks in an sich bekannter Weise in elektrische Spannungen umwandeln, welche von einer Auswerteeinheit problemlos verarbeitet werden können. Unter Verwendung einer geeigneten Auswerte-Software ist es beispielsweise möglich, auf einem Bildschirm exakt zu verfolgen, wie sich die Kräfteverteilung über die Bahnbreite ändert, wenn der Liniendruck im Behandlungsspalt beeinflußt wird. Somit kann ein von der Sensoranordnung ausgegebenes Signal bei der Steuerung eines das Anpreßelement oder/und das Gegenelement beaufschlagenden Kraftgeräts berücksichtigt werden. Man kann somit den Liniendruck erfindungsgemäß im laufenden Betrieb der Behandlungsvorrichtung gezielt beeinflussen und die hieraus resultierende Änderung der Kräfte- bzw. Druckverteilung im Spalt in Echtzeit beobachten. Dies ermöglicht eine Optimierung der im Spalt herrschenden Verhältnisse, und zwar bei Verwendung einer geeigneten Steuerungs-Software sowohl automatisch als auch durch eine Bedienungsperson von Hand, und gewährleistet somit letztendlich ein qualitativ hochwertiges Behandlungsergebnis.

Die Erfindung betrifft darüber hinaus eine mit einer Sensoranordnung bestückte Walze, wie sie beispielsweise in der vorstehend diskutierten Behandlungsvorrichtung zum Einsatz kommt. Derartige "Sensor-Walzen" können aber auch dort mit Vorteil zum Einsatz kommen, wo auf die Walze auch ohne den Einfluß eines Gegenelements allein durch die Wirkung der laufenden Materialbahn Druck ausgeübt wird. Als Beispiel seien hier lediglich Bahnleitwalzen ageführt.

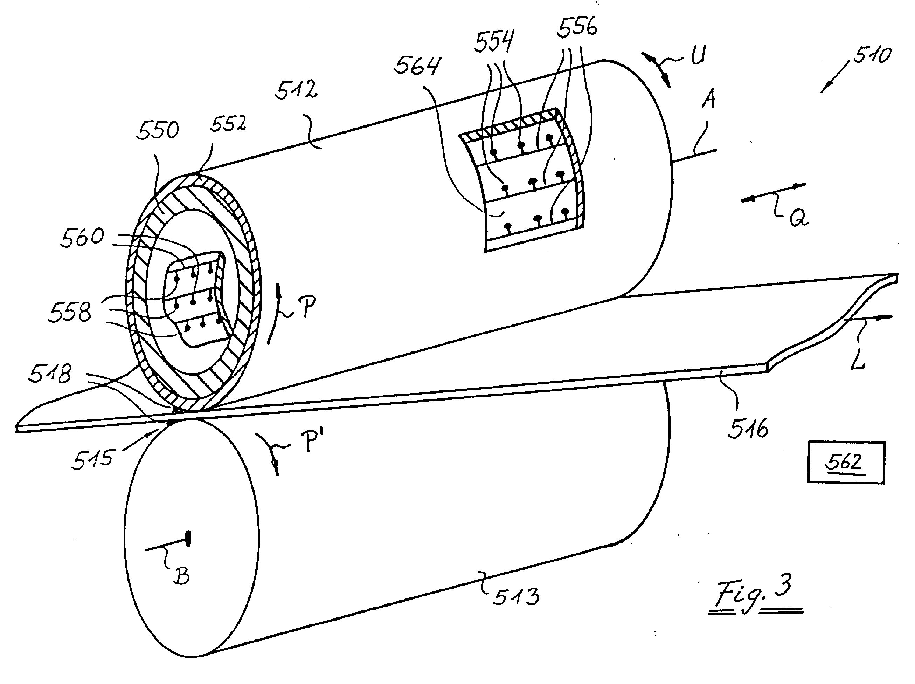

Die Erfindung wird im folgenden an einem Ausführungsbeispiel anhand der beigefügten Fig. 3 näher erläutert werden, welche eine perspektivische Darstellung einer erfindungsgemäßen Auftragsvorrichtung zeigt.

Eine erfindungsgemäße Auftragsvorrichtung ist in Fig. 3 allgemein mit 510 bezeichnet. Sie umfaßt in dem dargestellten, nicht beschränkenden Anwendungsbeispiel zwei Walzen 512 und 513, welche sich um Achsen A bzw. B drehen (Pfeile P und P') und zwischen sich einen Auftragsspalt 515 (in der Fachwelt auch als "Nip" bezeichnet) bilden. Mittels zweier nicht dargestellter Auftragswerke kann dem Nip 515 flüssiges oder pastöses Auftragsmedium 518 zugeführt werden, wo es auf eine sich in Richtung des Pfeils L durch den Nip 515 hindurchbewegende Materialbahn 516 aufgebracht wird.

In dem Ausführungsbeispiel gemäß Fig. 3 ist die Walze 512 zur Ermittlung der Verteilung der im Auftragsspalt 515 herrschenden Drücke bzw. Kräfte in Arbeits- bzw. Querrichtung Q ausgebildet. Die Walze 512 umfaßt einen starren Walzenmantel 550, der beispielsweise aus Stahl oder faserverstärktem Kunststoff gebildet sein kann, sowie einen Überzug 552 aus gummielastischem Material, beispielsweise Gummi, gummiartigem Material oder einem geeigneten Kunststoff. Wie in der in Fig. 3 rechten Hälfte der Walze 512 in einem aufgebrochenen Teil des Überzugs 552 dargestellt ist, kann unter diesem Überzug 552 eine Mehrzahl von Drucksensoren 554 sowohl in Umfangsrichtung U als auch in Achsrichtung A verteilt angeordnet sein. Ferner können auch die zu diesen Drucksensoren führenden Stromversorgungsleitungen und die von diesen Sensoren wegführenden Signalleitungen (in Fig. 3 zusammen mit 556 bezeichnet) unter dem Überzug 552 verlegt sein.

Zusätzlich oder alternativ zu den Drucksensoren 554 können auch in den Walzenmantel 550 Drucksensoren 558 eingebettet sein, welche sowohl in Umfangsrichtung U als auch in Achsrichtung A verteilt angeordnet sind, um es so analog zu den Drucksensoren 554 in jeder Drehstellung der Walze 512 zu ermöglichen, die Druckverteilung im Nip 515 in Querrichtung Q zu bestimmen. Auch die Leitungen 560 zu den Sensoren 558 sind in diesem Ausführungsbeispiel in den Walzenmantel 550 eingebettet.

Wie in Fig. 3 für die Sensoren 554 dargestellt ist, können diese Sensoren als vorgefertigte Sensoranordnung in einer Trägerfolie 564 integriert sein, was ihre Anbringung unter der Deckschicht 552 erleichtert.

Die Erfassungsergebnisse der Anordnung der Sensoren 554 bzw. der Anordnung der Sensoren 558 werden an eine Auswerteeinheit 562 übermittelt, welche es gemäß einer ersten Ausführungsvariante einer Bedienungsperson ermöglicht, herauszufinden, wo und wie stark der Liniendruck im Auftragsspalt 515 über ein oder mehrere nicht dargestellte Kraftgeräte beeinflußt werden muß, um eine im wesentlichen gleichmäßige Druck- bzw. Kräfteverteilung im Auftragsspalt 515 sicherzustellen. Gemäß einer zweiten Ausführungsvariante übernimmt die Auswerteeinheit 562 zusätzlich auch die Ermittlung der Position und der Stärke der Beeinflussung des Liniendrucks und gibt ein entsprechendes Signal an ein geeignetes Kraftgerät aus.

Obgleich dies in Fig. 3 nicht dargestellt ist, können den Sensoranordnungen 554/556 bzw. 558/560 entsprechende Sensoranordnungen auch in der Walze 513 vorgesehen sein, was eine weitere Verbesserung der Aussagekraft der Erfassungsergebnisse zur Folge hat.

Mit der erfindungsgemäßen Auftragsvorrichtung bzw. Druckverteilung-Bestimmungsvorrichtung ist es gemäß Vorstehendem möglich, auch bei dynamischen Verhältnissen, d.h. beispielsweise bei mit voller Produktionsgeschwindigkeit laufender Auftragsvorrichtung aussagekräftige Verteilungen der im Auftragsspalt herrschenden Kräfte bzw. Drücke zu ermitteln und in der Folge reproduzierbare und gleichmäßige Auftragsverhältnisse im Auftragsspalt zu schaffen, so daß ein gleichmäßiges und qualitativ hochwertiges Auftragsergebnis sichergestellt werden kann.

## Patentansprüche

1. Vorrichtung (510) zum Behandeln einer laufenden Materialbahn (516), insbesondere aus Papier oder Karton, umfassend
- ein Anpreßelement (512), beispielsweise eine Anpreßwalze, und ein Gegenelement (513), beispielsweise eine Gegenwalze,
wobei Anpreßelement (512) und Gegenelement (513) zwischen sich einen Spalt (515) bilden, durch welchen sich die Materialbahn (516) hindurchbewegt, und
- eine Vorrichtung zum Bestimmen der Verteilung des in dem Spalt (515) herrschenden Drucks,
**dadurch gekennzeichnet, daß** wenigstens eines der beiden Elemente, Anpreßelement (512) oder/und Gegenelement (513), als Walze ausgebildet ist, und daß die Druckverteilung-Bestimmungsvorrichtung eine Sensoranordnung (554/556, 558/560) mit einer Mehrzahl von sowohl in Umfangsrichtung (U) als auch in Achsrichtung (A) an der Walze (512) verteilt angeordneten Sensoren (554, 558) umfaßt.

2. Vorrichtung nach Anspruch 1,
**dadurch gekennzeichnet, daß** die Sensoren zur mittelbaren oder unmittelbaren Druckerfassung ausgebildet oder/und angeordnet sind.

3. Vorrichtung nach Anspruch 1 oder 2,
**dadurch gekennzeichnet, daß** wenigstens ein Teil der Sensoren (554) der Sensoranordnung an der Außenfläche der Walze (512) angeordnet ist, gewünschtenfalls unter einer Deckschicht (552), beispielsweise einer Deckschicht aus Gummi, gummi-artigem Material oder Kunststoff.

4. Vorrichtung nach Anspruch 3,
**dadurch gekennzeichnet, daß** auch die zu den Sensoren (554) führenden Leitungen (556) unter der Deckschicht (552) verlegt sind.

5. Vorrichtung nach einem der Ansprüche1 bis 4,
**dadurch gekennzeichnet, daß** wenigstens ein Teil der Sensoren (558) der Sensoranordnung in den Walzenmantel (550) eingebettet ist.

6. Vorrichtung nach Anspruch 5,
**dadurch gekennzeichnet, daß** auch die zu den Sensoren (558) führenden Leitungen (560) in den Walzenmantel (550) eingebettet sind.

7. Vorrichtung nach einem der Ansprüche 1 bis 6,
**dadurch gekennzeichnet, daß** die wenigstens eine Walze (512) aus faserverstärktem Kunststoff gefertigt ist, vorzugsweise kohlefaserverstärktem Kunststoff.

8. Vorrichtung nach einem der Ansprüche 1 bis 7,
**dadurch gekennzeichnet, daß** wenigstens ein Teil der Sensoren (554, 558) in einer Meßfolie (564) zusammengefaßt ist.

9. Vorrichtung nach einem der Ansprüche 1 bis 7,
**dadurch gekennzeichnet, daß** ein von der Sensoranordnung (554/556, 558/560) ausgegebenes Signal einer Steuereinheit (562) zur Steuerung eines das Anpreßelement (512) oder/und das Gegenelement (513) beaufschlagenden Kraftgeräts zugeführt wird.

10. Verwendung einer Vorrichtung nach einem der Ansprüche 1 bis 9 zum Auftragen eines flüssigen oder pastösen Auftragsmediums (518) auf die Materialbahn.

11. Walze (512), gewünschtenfalls zum Einsatz in einer Vorrichtung nach einem der Ansprüche 1 bis 9, umfassend eine Sensoranordnung (554/556, 558/560) mit einer Mehrzahl von sowohl in Umfangsrichtung (U) als auch in Achsrichtung (A) an der Walze (512) verteilt angeordneten Sensoren (554, 558).

12. Walze nach Anspruch 11,
**dadurch gekennzeichnet, daß** die Sensoren zur mittelbaren oder unmittelbaren Druckerfassung ausgebildet oder/und angeordnet sind.

13. Walze nach Anspruch 11 oder 12,
**dadurch gekennzeichnet, daß** wenigstens ein Teil der Sensoren (554) der Sensoranordnung an der Außenfläche der Walze (512) angeordnet ist, gewünschtenfalls unter einer Deckschicht (552), beispielsweise einer Deckschicht aus Gummi, gummi-artigem Material oder Kunststoff.

14. Walze nach Anspruch 13,
**dadurch gekennzeichnet, daß** auch die zu den Sensoren (554) führenden Leitungen (556) unter der Deckschicht (552) verlegt sind.

15. Walze nach einem der Ansprüche 11 bis 14,
**dadurch gekennzeichnet, daß** wenigstens ein Teil der Sensoren (558) der Sensoranordnung in den Walzenmantel (550) eingebettet ist.

16. Walze nach Anspruch 15,
**dadurch gekennzeichnet, daß** auch die zu den Sensoren (558) führenden Leitungen (560) in den Walzenmantel (550) eingebettet sind.

17. Walze nach einem der Ansprüche 11 bis 16,
**dadurch gekennzeichnet, daß** sie aus faserverstärktem Kunststoff gefertigt ist, vorzugsweise kohlefaserverstärktem Kunststoff.

18. Walze nach einem der Ansprüche 11 bis 17,
**dadurch gekennzeichnet, daß** wenigstens ein Teil der Sensoren (554, 558) in einer Meßfolie (564) zusammengefaßt ist.

19. Walze nach einem der Ansprüche 11 bis 17,
**dadurch gekennzeichnet, daß** ein von der Sensoranordnung (554/556, 558/560) ausgegebenes Signal einer Steuereinheit (562) zur Steuerung eines die Walze (512) oder/und ein mit dieser zusammenwirkendes Gegenelement (513) beaufschlagenden Kraftgeräts zugeführt wird.
